# EUROPÄISCHE PATENTSCHRIFT

(11) **EP 2 535 663 B1**
(45) Veröffentlichungstag und Bekanntmachung des Hinweises auf die Patenterteilung: **16.10.2013**
(21) Anmeldenummer: 11170215.5
(22) Anmeldetag: 16.06.2011
(51) Int. Cl.: F24J 2/54, F15B 11/00

(54) **Solarreflektor mit hydraulischer Verstellvorrichtung**
Solar reactor with hydraulic adjustment device
Réflecteur solaire doté d'un dispositif de réglage hydraulique

(43) Veröffentlichungstag der Anmeldung: 19.12.2012
(73) Patentinhaber: HAWE Hydraulik SE, 81673 München (DE)
(72) Erfinder: Neumair, Georg, 85402 Thalhausen (DE); Hundschell, Hilarius, 84424 Isen (DE)
(74) Vertreter: Grünecker, Kinkeldey, Stockmair & Schwanhäusser

(56) Entgegenhaltungen:
- EP-A1- 2 226 592
- EP-A1- 2 241 762
- WO-A1-2009/087257
- DE-A1-102008 064 137
- US-A1- 2007 074 510

## Beschreibung

Die Erfindung betrifft einen Solarreflektor der im Oberbegriff des Patentanspruchs 1 angegebenen Art.

Solche Solarreflektoren sind bekannt und werden in Solarkraftwerken in großer Anzahl installiert, wobei aus der Sonnenenergie beispielsweise über Parabolspiegel ein Wärmeträgermedium erhitzt und zur Erzeugung elektrischen Stroms verwendet wird. Der Parabolspiegel einer Solarrinne kann durchaus eine Breite von mehreren Metern und eine Länge von mehreren hundert Metern aufweisen, und wird über mehrere Pylonen, z.B. auf dem Boden, abgestützt. Die von der Nabe definierte Drehachse des Parabolspiegels wird meist in einer Nord/Süd-Orientierung positioniert, damit der Parabolspiegel dem Sonnenstand von Osten nach Westen nachgeführt werden kann. Für die Nachführung und für weitere Anforderungen ist für eine Solarrinne üblicherweise mindestens eine elektrohydraulische Verstellvorrichtung vorgesehen. Abgesehen von der Anforderung, den Parabolspiegel am Morgen nach Osten auszurichten und während des Sonnentages in einzelnen Schritten nach Westen zu verstellen, wird häufig auch eine Notfallfunktion, beispielsweise für einen Stromausfall, gefordert, um entweder über eine Notstromversorgung oder einen hydraulischen Druckspeicher den Parabolspiegel über ein bestimmtes Winkelmaß aus der Sonne nach Osten zu drehen und eine Überhitzung des Wärmeträgers zu vermeiden. Nach einem Sonnentag oder vor einem Sonnentag muss der Parabolspiegel in die Orientierung nach Osten überführt werden. Während der Nacht oder bei aufkommendem Wind oder Sturm muss der Parabolspiegel in wenigstens eine sichere Verstauposition, gegebenenfalls mit hoher Verstellgeschwindigkeit, gebracht werden. Zusätzlich sind gegebenenfalls eine Montageposition und eine Wartungsposition einstellbar. Grundsätzlich muss für die Verstellung in der Solarrinne der Energie-Eigenbedarf so gering wie möglich sein, um einen günstigen Gesamtwirkungsgrad zu erzielen, muss die Verstellvorrichtung über lange Standzeit störungssicher sein, und soll schließlich der bauliche und steuerungstechnische Aufwand minimiert werden. Da der Gesamtverstellbereich der Solarrinne mehr als 120° beträgt, genügt ohne verschleißanfälliges Getriebe ein einzelner Hydrozylinder nicht, sondern werden im Regelfall mindestens zwei versetzt an der Nabe angreifende Hydrozylinder verwendet, die gemeinsam den notwendigen Verstellbereich abdecken.

Bei einem aus EP 2 226 592 A bekannten Solargenerator werden über zwei 2/2-Wege-Sitzventile und zwei Paare jeweils überkreuz aufsteuerbarer Lasthalteventile beide Hydrozylinder jeweils gleichzeitig gesteuert, so dass sie entweder beide ausfahren oder einfahren, oder einer ausfährt und der andere einfährt, und umgekehrt, wobei jeder Hydrozylinder zwischen seiner Ausfahrbewegung und Einfahrbewegung einen Übergangsbereich überfahren muss, in welchem er mit seiner weiterhin wirkenden Betätigungskraft einen ungünstigen Hebelarm in Bezug auf die Achse der Nabe hat und mit Unterstützung des jeweils anderen Hydrozylinder über den Übergangsbereich gebracht wird. Mit diesem Ansteuerungsprinzip beider Hydrozylinder haben sich jedoch in der Praxis Lagerschäden der Nabe gezeigt, die trotz genau getimter Ansteuerung beider Hydrozylinder vermutlich dadurch auftreten, dass bei gleichzeitiger Betätigung der Hydrozylinder der seinen Totpunktbereich durchfahrende Hydrozylinder gegen den anderen Hydrozylinder arbeitet und/oder eine exzentrische hohe Last in der Lagerung erzeugt, weil er sich nicht in eine Schwimmstellung freischalten lässt.

Bei einem bekannten, gattungsgemäßen Solarreflektor in Form einer Solarrinne, der bereits beispielsweise in einem Solarkraftwerk in Spanien eingesetzt wird, umfasst die Ventilgruppe der elektrohydraulischen Steuerung der Verstellvorrichtung für jeden Hydrozylinder zwei jeweils durch einen Magneten betätigte 3/2-Wege-Sitzventile und ein drittes, durch einen Proportionalmagneten betätigtes 2/2-Wege-Druckbegrenzungsventil zum Freischalten des Hydrozylinders in eine Schwimmstellung. Die beiden Arbeitsleitungen jedes Hydrozylinders sind durch zwei überkreuz aufsteuerbare Lasthalteventile abgesichert, die aufwändige Leitungsführungen, Federn und Drosseln erfordern. Die Verstellung der Solarrinne erfolgt dabei so, dass nur ein Hydrozylinder arbeitet, wenn der andere freigeschaltet ist und von dem einen Hydrozylinder über den Übergangsbereich geschleppt wird. Auf diese Weise lässt sich zwar die Gefahr eines Lagerschadens an der Nabe minimieren, jedoch ist der bauliche Aufwand der Ventilgruppe hoch und werden vor allem bei zwei Hydrozylindern insgesamt sechs Magneten benötigt, die entsprechend logisch anzusteuern sind, und den elektrischen Eigenstrombedarf der Verstellvorrichtung unzweckmäßig erhöhen. Die große Anzahl Magneten stellt eine akute Fehlerquelle (Magnetschaden, Verschleiß) dar, da die Magneten über die geforderte Standzeit enorm viele Schaltzyklen auszuführen haben und ein bestromter Magnet bei jedem Verstellschritt über die gesamte Dauer des Verstellschrittes bestromt wird. Die vielen Magneten und die hohe Anzahl der Ventile erfordern auch hohen steuerungstechnischen Aufwand, gepaart mit zumindest zweitweise hohem Strömungswiderstand aufgrund aufwändiger Leitungsführung

Aus DE 10 2008 064 137 A ist eine hydraulische Steueranordnung zum Betätigen eines doppelt wirkenden Hydrozylinders bekannt, die für jede Arbeitsleitung ein 3/2-Wege-Schieberventil und ein Senkbremsventil aufweist, wobei die Senkbremsventile in den beiden Arbeitsleitungen überkreuz aufsteuerbar sind. In der Steueranordnung ist nur eine 3-Stellungs-3-Wege-Ventilfunktion möglich, so dass sich der Hydrozylinder nicht in eine Schwimmstellung freischalten lässt.

Der Erfindung liegt die Aufgabe zugrunde, einen Solarreflektor zu schaffen, bei dem der Vorteil geringer Lagerbelastungen gepaart ist mit minimalem elektrischen Eigenstrombedarf, minimaler Komponentenzahl, minimalem Bauraum, minimaler Magnetanzahl und weniger Magnetschaltzyklen der elektrohydraulischen Verstellvorrichtung.

Die gestellte Aufgabe wird mit den Merkmalen des Patentanspruchs 1 gelöst.

Da nur federbelastete Wege-Sitzventile in der Kombination vorgesehen sind, und nur zwei Magneten verwendet werden, die wahlweise einzeln und z.B. zur Freischaltung des Hydrozylinders gemeinsam betätigbar sind, werden insgesamt Komponenten eingespart, wird die Anzahl akuter Fehlerquellen auf der Seite der Magneten gegenüber dem Stand der Technik mit sechs Magneten um ein Drittel reduziert, und verringert sich auch der elektrische Eigenbedarf der elektrohydraulischen Verstellvorrichtung aufgrund der geringen Magnetanzahl erheblich. Die die Kombination aus zwei gleichen Paaren federbelasteter Wege-Sitzventile aufweisende Ventilgruppe, in der jedes Paar aus einem 3/2-Wege-Sitzventil und einem 2/2-Wege-Sitzventil besteht, die paarweise durch einen gemeinsamen Magneten betätigbar sind, resultiert in der Verstellvorrichtung für zwei Hydrozylinder in nur insgesamt vier Wege-Sitzventilen und vier Magneten. Dabei ist an das 3/2-Wege-Sitzventil jedes Paares eine Arbeitsleitung des Hydrozylinders angeschlossen. An einen ersten Anschluss des 3/2-Wege-Sitzventils jedes Paares ist ferner eine Tankleitung angeschlossen. An einen zweiten Anschluss des 3/2-Wege-Sitzventils jedes Paares ist ferner ein Strömungsweg zu dem 2/2-Wege-Sitzventil des jeweils anderen Paares angeschlossen. Eine Druckleitung ist schließlich an die 2/2-Wege-Sitzventile beider Paare angeschlossen. Aus dieser Verschaltung der Wege-Sitzventile resultiert in der Verstellvorrichtung eine Vierstellungs-Nierwege-Ventilfunktion mit nur zwei Magneten für jeden Hydrozylinder. Die Freischaltung des jeweiligen Zylinders lässt sich z.B. durch gleichzeitiges Betätigen der Magneten beider Paare ohne zusätzliches Ventil und ohne zusätzliche Magneten bewerkstelligen, weil durch die gleichzeitige Bestromung beider Magneten beider Paare und deren hydraulische Verschaltung sozusagen eine weitere Schaltstellung generiert wird, die zum Freischalten des Hydrozylinders nutzbar ist. Da nur die vier Magneten zu steuern sind, reduziert sich die Anzahl der Schaltzyklen und ist vor allem der elektrische Eigenbedarf minimiert. Zur Freischaltung kann auch eine andere Zusammenstellung der Ventilgruppe benutzt werden.

Zweckmäßig werden die beiden Paare in einem gemeinsamen, innenliegende Strömungswege aufweisenden Gehäuse untergebracht, auf welchem auch die Magneten montiert sind. Dies spart Bauraum und Gewicht, stellt kurze und strömungsverlustarme Strömungswege sicher und resultiert in langer, störungsarmer Standzeit. Zweckmäßig besteht das Gehäuse aus spanend bearbeitetem Stahl, so dass bei minimalen Abmessungen extrem hohe Druckfestigkeit und Druckdichtigkeit gewährleistet werden. Das Gehäuse kann direkt am Hydrozylinder montiert werden.

Um den baulichen Aufwand weiter zu reduzieren, ist es zweckmäßig, jeweils zwischen der Kombination und dem Hydrozylinder in jeder Arbeitsleitung ein Bremsregelventil anzuordnen, das durch eine Bypassleitung mit einem Rückschlagventil umgangen wird, wenn die Arbeitsleitung zum Hydrozylinder druckbeaufschlagt werden muss. Das Bremsregelventil ist, vorzugsweise, auf eine vorbestimmte Durchflussmengengrenze einstellbar und wirkt nach Art eines Senkbremsventils, das eine Überschreitung einer vorbestimmten Bewegungsgeschwindigkeit des Hydrozylinders verhindert. Dieses Bremsregelventil spricht auf die Druckdifferenz an und hat deshalb keinen nennenswerten Einfluss beim Schleppen des freigeschalteten Hydrozylinders, da dann die Druckdifferenz minimal ist.

Da betriebsbedingt Situationen gegeben sind, in denen der Hydrozylinder sowohl von der Druckquelle als auch vom Tank separiert und dann das Druckmittel im Hydrozylinder eingesperrt ist, ist es bei einer weiteren Ausführungsform zweckmäßig, in die Bremsventile und die Kombination umgehenden Abströmleitungen aus dem Hydrozylinder zum Tank Schockventile anzuordnen, die bei einem unzweckmäßigen Druckanstieg oder einem Druckschlag Druckmittel an den Bremsregelventilen und der Kombination vorbei zum Tank abströmen lassen.

Insbesondere kann die Tankleitung an den bei stromlosem Magneten blockierten ersten Anschluss des jeweiligen 3/2-Wege-Sitzventils angeschlossen sein, sind die Strömungswege an den beiden 3/2-Wege-Sitzventilen an den bei stromlosen Magneten offenen zweiten Anschlüssen angeschlossen und zu einem bei stromlosem Magneten blockierten Anschluss des jeweiligen 2/2-Wege-Sitzventils des anderen Paares geführt. Die Druckleitung ist zweckmäßig an bei stromlosen Magneten blockierten Anschlüssen der beiden 2/2-Wege-Sitzventile angeschlossen. Aus dieser Verschaltung resultiert auch eine wünschenswerte Blockierung beispielsweise der Druckleitung oder der Tankleitung in bestimmten Schaltsituationen, um bei Nichtbetätigung des Hydrozylinders Leckverluste auszuschließen.

Zweckmäßig sind die Strömungswege und die Druckleitung und die Tankleitung, zumindest abschnittsweise, im Gehäuse innen angeordnet, um kurze Strömungswege zu gewährleisten und zusätzliche Leitungen oder Schläuche zu vermeiden.

Schließlich ist es zweckmäßig, wenn über die Steuerung der elektrohydraulischen Verstellvorrichtung ein jeweiliger Hydrozylinder voreilend zum Aus- oder Einfahren eines anderen oder des zweiten Hydrozylinders freischaltbar ist, und zwar zum Tank (eine Art Schwimmstellung) und der freigeschaltete Hydrozylinder über eines der Bremsventile vom anderen oder zweiten Hydrozylinder leicht geschleppt werden kann. Diese Steuerroutine kann über den gesamten Verstellbereich des Solarreflektors angewendet werden, oder zumindest im Bereich des jeweiligen Totpunktes eines Hydrozylinders, in welchem dieser einen ungünstig kleinen oder keinen Hebelarm in Bezug auf die Achse des Drehgliedes des Spiegels hat.

Anhand der Zeichnung werden Ausführungsformen des Erfindungsgegenstandes erläutert. Es zeigen:
- Fig. 1: eine Seitenansicht einer Solarrinne,
- Fig. 2: ein Blockschaltbild einer elektrohydraulischen Verstellvorrichtung eines Solarreflektors von Fig. 1, wobei Ventilgruppen in stark vereinfachter Symbolik gezeigt sind, und
- Fig. 3: ein Blockschaltbild, in der die Symbolik der Ventilgruppe eines Hydrozylinders detailliert aufgelöst ist.

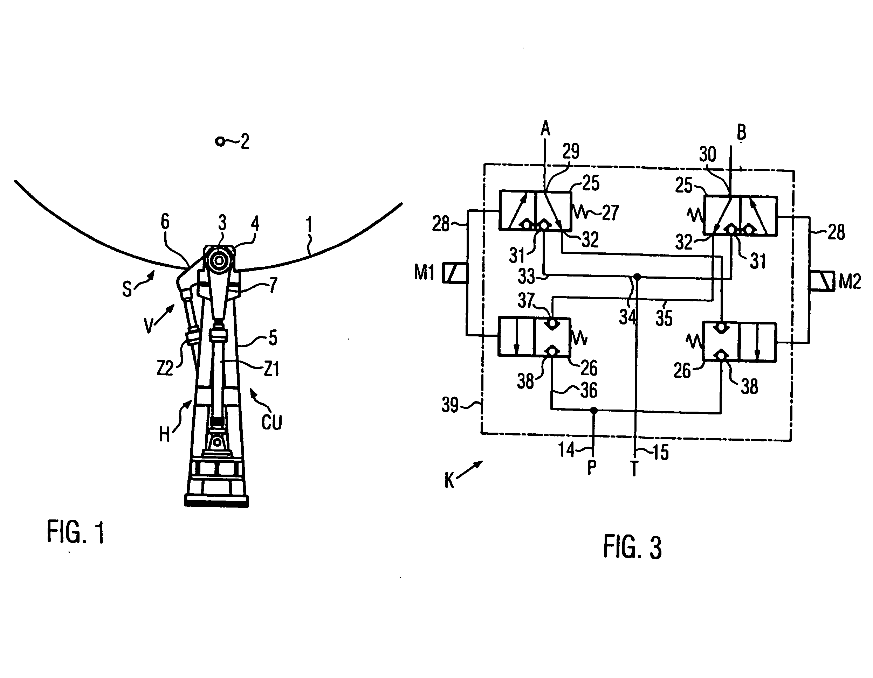

Fig. 1 zeigt von einer Solarrinne S im Schnitt einen Parabolspiegel 1, in dessen Brennpunktbereich ein mit einer einem Wärmeträgermedium beschicktes Absorberrohr 2 platziert ist, und der an einem Drehglied in Form einer Nabe 3 installiert ist, die in einer Lagerung 4 jeweils eines Pylonen 5 drehbar ist. Die Achse der Lagerung 4 ist beispielsweise in einer Nord-/Süd-Orientierung angeordnet. Das Verdrehen des Parabolspiegels 1 in der Lagerung 4, z.B. zur Sonnenstandsnachführung, wird über eine elektrohydraulische Verstellvorrichtung V mit einer elektronischen Steuerung CU bewerkstelligt, die beispielsweise im Pylonen 5 und zum Teil direkt an zwei Hydrozylindern Z1, Z2 angeordnet sind.

Die Hydrozylinder Z1, Z2 sind beispielsweise gemeinsam schwenkbar im Pylonen 5 abgestützt und jeweils an einem Schwenkarm 6, 7 angelenkt, der an der Nabe drehfest montiert ist, so dass die Hydrozylinder Z1, Z2 in Drehrichtung um die Achse der Lagerung 4 zueinander versetzt angreifen. In Fig. 1 ist der Parabolspiegel 1 in einer Drehposition dargestellt, die annähernd einer Mittagsposition der Sonne entspricht und/oder auch eine Montageposition sein kann. Die Nachführung des Parabolspiegels 1 erfolgt beispielsweise aus einer Morgenposition, in der der Parabolspiegel 1 nach Osten weist, in einzelnen Schritten bis zu einer Abendposition, in der der Parabolspiegel 1 nach Westen weist. Über die Verstellvorrichtung V können andere Stellbewegungen, den Anforderungen an solche Solarrinnen entsprechend, ebenfalls vorgenommen werden.

Obwohl die Erfindung im Einzelnen ausführlich in Bezug auf eine Solarrinne beschrieben ist, betrifft sie gleichermaßen auch andere Typen von Solarreflektoren, insbesondere Reflektoren für Heliostaten, bei denen das Sonnenlicht über verstellbare Spiegel auf einen Punkt, insbesondere in einem Turm, konzentriert wird.

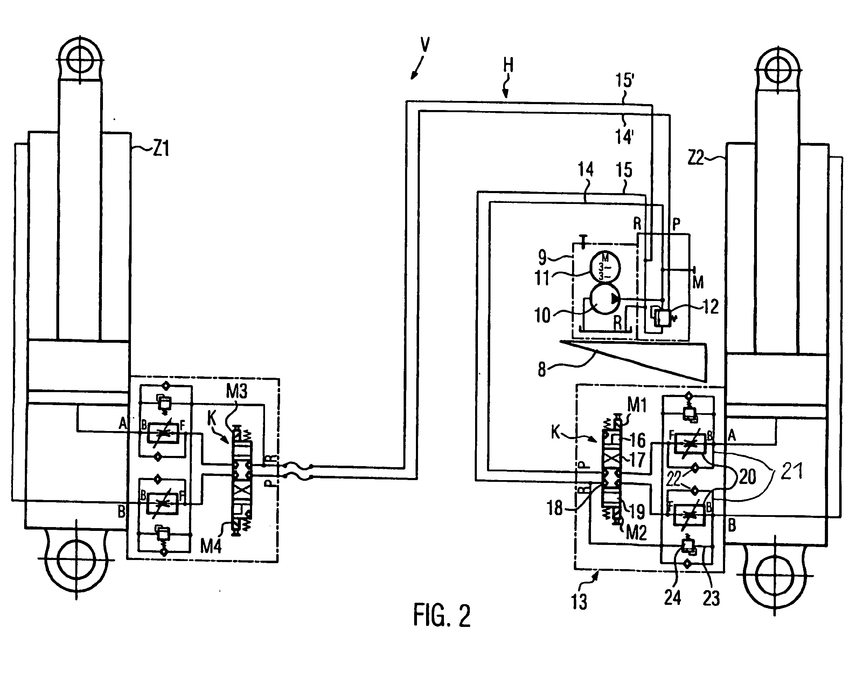

Fig. 2 verdeutlicht als Blockschaltbild eine Hydrauliksteuerung H der Verstellvorrichtung V für die beiden Hydrozylinder Z1, Z2, wobei jedem Hydrozylinder Z1, Z2 eine Ventilkombination K in einer Ventilgruppe 13 zugeordnet ist. Da die Ventilgruppen 13 beider Hydrozylinder Z1, Z2 einander gleich sind, wird nachfolgend hauptsächlich auf die Ventilgruppe 13 und die weiteren Komponenten der Hydrauliksteuerung H für den rechten Hydrozylinder Z2 eingegangen.

Die Verstellvorrichtung V wird zumindest beim Nachführen des Parabolspiegels 1 nach dem Sonnenstand in einzelnen Schritten so gesteuert, dass jeweils nur ein Hydrozylinder Z1 oder Z2 arbeitet (einfährt oder ausfährt), während bei dem Nachführschritt bzw. kurz vor diesem Nachführschritt der jeweils andere Hydrozylinder freigeschaltet ist (Schwimmstellung).

Zu Hydrauliksteuerung H gehört ein z.B. auf einer Konsole 8 am Pylonen 5 installiertes Motor-Pumpenaggregat 9 mit einer als Druckquelle fungierenden Pumpe 10, die von einem Elektromotor 11 angetrieben wird, wobei der Druckseite der Pumpe 10 ein Systemdruck-Begrenzungsventil 12 in einer Verbindung zwischen der Druckseite und einem Tank R zugeordnet ist. Aus dem Motor-Pumpenaggregat 9 führen zwei Druckleitungen 14, 14' und zwei Tankleitungen 15, 15' jeweils zur Ventilgruppe 13 eines Hydrozylinders Z1, Z2.

In der Ventilgruppe 13 des Hydrozylinders Z2 (und auch des Hydrozylinders Z1) ist eine Ventilkombination K ausschließlich aus Wege-Sitzventilen mit zwei Magneten M1, M2 als elektrischer Betätiger vorgesehen, an die die Druckleitung 15 und die Tankleitung 14 angeschlossen sind, und die eine Vierwege-/Vierstellungs-Ventilfunktion mit Hilfe der beiden Magneten M1, M2 und nicht näher hervorgehobenen Federn erfüllt. Von der Kombination K führen Arbeitsleitungen A, B zum Hydrozylinder Z2, der beispielsweise ein Differentialzylinder mit einer stangenseitigen Kammer und einer kolbenseitigen Kammer ist. Eine Druckbeaufschlagung der Arbeitsleitung A resultiert im Ausfahren des Hydrozylinders Z2, bei gleichzeitiger Verbindung der Arbeitsleitung B mit dem Tank R, während eine Beaufschlagung der Arbeitsleitung B bei gleichzeitiger Entlastung der Arbeitsleitung A zum Tank R zum Einfahren des Hydrozylinders Z2 führt.

In jeder Arbeitsleitung A, B ist ein Bremsregelventil 20 angeordnet, das einstellbar ist und eine maximale Menge selbsttätig regelt (nach Art eines Senkbremsventils), und zwar jeweils in Abströmrichtung in der Arbeitsleitung A oder B. Das Bremsregelventil 20 wird durch eine Leitungsschleife 21 umgangen, in welcher ein Rückschlagventil 22 angeordnet ist, das in Abströmrichtung sperrt. Ferner ist eine Umgehungsleitung 23 zur jeweiligen Arbeitsleitung A, B vorgesehen, in der ein als Schockventil 24 dienendes, einstellbares Druckbegrenzungsventil enthalten ist. Die Umgehungsleitung ist an die Tankleitung 15 an der den Bremsregelventilen 20 und der Kombination K abgewandten Seite angeschlossen.

Die Kombination K leistet, wie erwähnt, in den vier angedeuteten Stellungen 16, 17, 18, 19 vier verschiedene Wegefunktionen. In der Stellung 16 sind beide Arbeitsleitungen A, B miteinander verbunden und gemeinsam an die Tankleitung 15 angeschlossen. Die Stellung 16 wird geschaltet durch gleichzeitiges Bestromen der beiden Magneten M1, M2 (für den Hydrozylinder Z1 durch gleichzeitiges Bestromen der Magneten M3 und M4 der dortigen Kombination K). In der Stellung 17 ist die Arbeitsleitung A mit der Tankleitung 15 verbunden, und gleichzeitig die Arbeitsleitung B mit der Druckleitung P. Hierfür wird nur der Magnet M1 bestromt; der Magnet M2 bleibt stromlos. In der Stellung 18 sind beide Arbeitsleitungen A, B, jeweils leckagefrei dicht, in der Kombination K abgesperrt, und auch die Druckleitung P und die Tankleitung 15, jeweils leckagefrei abgesperrt, so dass beide Arbeitsleitungen A, B von der Druckleitung 14 und der Tankleitung 15 separiert sind. Diese Stellung wird bei unbestromten Magneten M1, M2 durch Federn eingestellt. In der Stellung 19 ist die Druckleitung 14 mit der Arbeitsleitung A verbunden, während die Arbeitsleitung B mit der Tankleitung 15 verbunden ist. Diese Stellung wird durch Bestromen des Magneten M2 geschaltet, während der Magnet M1 stromlos ist.

Fig. 3 verdeutlicht die Kombination K in detaillierter Symbolik. Die Kombination besteht aus zwei gleichen 3/2-Wege-Sitzventilen 15 und zwei gleichen 2/2-Wege-Sitzventilen 26, wobei in der Kombination jeweils ein 3/2-Wege-Sitzventil 15 und ein 2/2-Wege-Sitzventil 26 ein Paar bilden, das gemeinsam durch einen Magneten M1 oder M2 betätigbar ist. Die Wege-Sitzventile sind beispielsweise in einem Gehäuse 39 (z.B. einem spanend bearbeiteten Stahlblock) als Einsätze eingebracht, wobei das Gehäuse 39 innenliegende Strömungswege 33, 34, 35, 36 enthält, und jeder Magnet M1 ein Betätigungsglied 28 (Balken oder Feder) zum gleichzeitigen Betätigen des jeweiligen Paares aufweist und an einer Seite des Gehäuses 39 montiert ist. Die Wege-Sitzventile werden jeweils gegen die Magnetkraft durch Federn 27 beaufschlagt. Bei unbestromten Magneten M1, M2 ergibt sich durch die Wirkung der Federn 27 das in Fig. 3 gezeigte Verschaltungsprinzip.

An einen Anschluss 29 des 3/2-Wege-Sitzventils 25 des dem Magneten M1 zugeordneten Paares ist die Arbeitsleitung A angeschlossen, während an einen Anschluss 30 des anderen 3/2-Wege-Sitzventils 25 des anderen, zum Magneten M2 gehörenden Paares die Arbeitsleitung B angeschlossen ist. An den jeweiligen ersten Anschluss des 3/2-Wege-Sitzventils 25 ist ein Strömungsweg 33 angeschlossen, der zur Tankleitung 15 führt. An den jeweils zweiten Anschluss 32 jedes 3/2-Wege-Sitzventils 25 ist ein Strömungsweg 34 bzw. 35 angeschlossen, der zu einem Anschluss 37 des 2/2-Wege-Sitzventils 26 des jeweils anderen Paares führt. An den Anschluss 38 jedes 2/2-Wege-Sitzventils 26 ist schließlich ein Strömungsweg 36 angeschlossen, der mit der Druckleitung 14 in Verbindung steht.

Die in Fig. 3 gezeigte Verschaltungssituation entspricht der Stellung 18 in Fig. 2. Werden beide Magneten M1, M2 gleichzeitig betätigt, entspricht dies der Stellung 16 in Fig. 2. Hierbei ist die Arbeitsleitung A über das in Fig. 3 linke 3/2-Wege-Sitzventil 25 wie auch die Arbeitsleitung B über das in Fig. 3 rechte 3/2-Wege-Sitzventil 25 und den Strömungsweg 33 mit der Tankleitung 15 verbunden. Gleichzeitig sind die Strömungswege 35, 34 über die geschalteten 2/2-Wege-Sitzventile 26 mit der Druckleitung 14 verbunden; diese wird jedoch an den Anschlüssen 31 blockiert. Der Hydrozylinder Z2 ist freigeschaltet. Wird nur der Magnet M1 bestromt (Stellung 16 in Fig. 2), dann ist die Arbeitsleitung A über den Anschluss 31 des linken 3/2-Wege-Sitzventils 25 und den Strömungsweg 33 mit der Tankleitung 15 verbunden, während die Verbindung mit der Druckleitung 14 am Anschluss 31 blockiert ist, und ist gleichzeitig die Arbeitsleitung B, wie gezeigt, über den Anschluss 32 und den Strömungsweg 35 über das dann geschaltete linke 2/2-Wege-Sitzventil 26 mit der Druckleitung 14 verbunden, die einseitig am Anschluss 38 des rechten 2/2-Wege-Sitzventils 26 blockiert ist. Der Hydrozylinder Z2 fährt ein. Wird der Magnet M2 bestromt (Stellung 19 in Fig. 2), dann ist die Arbeitsleitung A, wie gezeigt, über den Anschluss 31 des linken 3/2-Wege-Sitzventils 25 und der Strömungsweg 34 und über das dann ungeschaltete rechte 2/2-Wege-Sitzventil 26 am Anschluss 38 mit der Druckleitung 14 verbunden, während die Arbeitsleitung B, wie in Fig. 3 gezeigt, mit der Tankleitung 15 verbunden ist. Der Hydrozylinder Z2 fährt aus. Sind beide Magneten M1, M2 unbestromt, wird der Hydrozylinder Z2 hydraulisch blockiert.

Die in den Fig. 2 und 3 gezeigten Verschaltungssituationen in der Kombination K sind nur beispielhaft und nicht beschränkend, d.h., es könnte auch jede andere Stellung der Kombination K beispielsweise dazu verwendet werden, z.B. den jeweiligen Hydrozylinder Z1 oder Z2 freizuschalten.

Ferner kann das Prinzip, anstelle der üblichen Lasthalteventile zum Absichern der Hydrozylinder zugunsten von Bremsregelventilen aufzugeben, die einfacher verschaltbar sind, z.B. auch bei Ventilgruppen, in denen Sitzventile anders kombiniert und/oder nicht nur durch Magnet-Betätiger betätigt werden, sondern mechanisch über Taster und Steuerkurven verwendet werden. Bei den Magneten M1 bis M4 der erläuterten Ausführungsbeispiele sind zusätzlich manuelle und/oder kurvengesteuerte Notbetätigungen vorgesehen.

## Patentansprüche

1. Solarreflektor (S) mit einer elektrohydraulischen, eine Druckquelle (10), einen Tank (R) sowie eine elektronische Steuerung (CU) aufweisenden Verstellvorrichtung (V), die mindestens zwei doppelseitig beaufschlagbare, versetzt an einem mit einem Spiegel (1) gekoppelten Drehglied (3) angreifende Hydrozylinder (Z1, Z2) und pro Hydrozylinder (Z1, Z2) eine in einer Kombination (K) zumindest magnetbetätigte, federbelastete Wege-Sitzventile aufweisende Ventilgruppe (13) umfasst, mit der wahlweise jeder der Hydrozylinder (Z1, Z2) ein- oder ausfahrbar, von der Druckquelle und vom Tank separierbar, oder zum Tank (R) in eine Schwimmstellung freischaltbar ist, wobei die Kombination (K) ausschließlich Wege-Sitzventile und zwei wahlweise sowohl einzeln als auch gegebenenfalls zur Freischaltung des Hydrozylinders (Z1, Z2) gemeinsam betätigbare Magneten (M1, M2; M3, M4) aufweist, **dadurch gekennzeichnet, dass** die Kombination (K) aus zwei gleichen Paaren jeweils aus einem 3/2-Wege-Sitzventil (25) und einem 2/2-Wege-Sitzventil (26) zusammengesetzt ist, von denen jedes Paar durch einen gemeinsamen Magneten (M1, M2; M3, M4) betätigbar ist, dass an das 3/2-Wege-Sitzventil (25) jedes Paares eine Arbeitsleitung (A oder B) des Hydrozylinders angeschlossen ist, dass an einen ersten Anschluss (31) des 3/2-Wege-Sitzventils (25) jedes Paares eine Tankleitung (15) angeschlossen ist, dass an einen zweiten Anschluss (32) des 3/2-Wege-Sitzventils (25) jedes Paares ein Strömungsweg (34, 35) zu dem 2/2-Wege-Sitzventil (26) des jeweils anderen Paares angeschlossen ist, und dass an die 2/2-Wege-Sitzventile (26) beider Paare eine Druckleitung (14) angeschlossen ist.

2. Solarreflektor nach Anspruch 1, **dadurch gekennzeichnet, dass** die beiden Paare in einem gemeinsamen, innenliegende Strömungswege (33, 34, 35, 36) aufweisenden Gehäuse (39), vorzugsweise aus spanend bearbeitetem Stahl, untergebracht sind, auf dem die Magneten (M1, M2) beider Paare montiert sind.

3. Solarreflektor nach Anspruch 1, **dadurch gekennzeichnet, dass** zwischen der Kombination (K) und dem Hydrozylinder (Z1, Z2) in jeder Arbeitsleitung (A, B) ein Bremsregelventil (20) angeordnet ist, dem eine Bypassleistung (21) mit einem in Abströmrichtung aus dem Hydrozylinder (Z1, Z2) sperrenden Rückschlagventil (22) zugeordnet ist, und das, vorzugsweise, auf eine vorbestimmte Durchflussmengengrenze einstellbar ist.

4. Solarreflektor nach Anspruch 3, **dadurch gekennzeichnet, dass** in die Bremsregelventile (20) und die Kombination (K) umgehenden Abströmleitungen (23) aus dem Hydrozylinder (Z1, Z2) zum Tank (R) Schockventile (24) enthalten sind.

5. Solarreflektor nach Anspruch 1, **dadurch gekennzeichnet, dass** die Tankleitung (15) über einen Strömungsweg (33) an den bei stromlosem Magneten (M1, M2) blockierten ersten Anschluss (31) des 3/2-Wege-Sitzventils (25) beider Paare angeschlossen ist, dass die Strömungswege (34, 35) an den bei stromlosem Magneten (M1, M2) offenen zweiten Anschluss (32) des 3/2-Wege-Sitzventils (25) eines Paares angeschlossen sind und zu einem bei stromlosem Magneten (M1, M2) blockierten Anschluss des 2/2-Wege-Sitzventils (26) des jeweils anderen Paares führen, und dass die Druckleitung (14, 36) an bei stromlosen Magneten (M1, M2) blockierten Anschlüssen (38) der 2/2-Wege-Sitzventile (26) beider Paare angeschlossen ist.

6. Solarreflektor nach Anspruch 2, **dadurch gekennzeichnet, dass** die Strömungswege (33, 34, 35, 36) und zumindest auch zum Teil die Druckleitung (14) und die Tankleitung (15) im Gehäuse (39) der Kombination (K) angeordnet sind.

7. Solarreflektor nach Anspruch 3, **dadurch gekennzeichnet, dass** über die Steuerung (CU) ein jeweiliger Hydrozylinder (Z1, Z2) voreilend zum Aus- oder Einfahren eines anderen oder eines zweiten Hydrozylinders (Z2, Z1) freischaltbar ist und der freigeschaltete Hydrozylinder über eines der Bremsventile (20) vom anderen oder zweiten Hydrozylinder zumindest im Wesentlichen ungebremst schleppbar ist.

## Claims

1. Solar reflector (S) with electrohydraulic adjustment device (V), the adjustment device (V) having a pressure source (10), a tank (R) as well as an electronic control (CU), at least two double-actuated hydro-cylinders (Z1, Z2) engaging circumferentially offset at a rotation member (3) coupled with a mirror (1), and a valve group (13) per hydro-cylinder (Z1, Z2), the valve group (13) comprising in a combination (K) at least solenoid actuated, spring-loaded multi-way seat valves, by means of which selectively each of the hydro-cylinders (Z1, Z2) can be retracted or extended, separated from the pressure source and from the tank, or unlocked into a floating position to the tank (R), wherein the combination (K) comprises exclusively multi-way seat valves and two solenoids (M1, M2; M3, M4) which selectively can be actuated one by one or commonly for optionally unlocking the hydro-cylinders (Z1, Z2), **characterised in that** the combination (K) is formed from two equal pairs of multi-way seat valves respectively consisting of a 3/2 multi-way seat valve (25) and a 2/2 multi-way seat valve (26), of which each pair can be actuated by a common solenoid (M1, M2, M3, M4), that a working line (A) or (B) of the respective hydro-cylinder is connected to the 3/2 multi-way seat valve (25) of each pair, that a tank line (15) is connected with a first port (31) of the 3/2 multi-way seat valve (25) of each pair, that a flow path (34, 35) extending to the 2/2 multi-way seat valves (26) of the respective other pair is connected to a second port (32) of the 3/2 multi-way seat valve (25) of each pair, and that a pressure line (14) is connected with the 2/2 multi-ways seat valve (26) of both pairs.

2. Solar reflector according to claim 1, **characterised in that** both pairs are accommodated in a common housing (39), preferably made from machined steel, the housing (39) having interior flow paths (33, 34, 35, 36), the solenoids (M1, M2) of both pairs being mounted on the housing (39).

3. Solar reflector according to claim 1, **characterised in that** in each working line (A, B) a braking regulating valve (20) is arranged between the combination (K) and the hydro-cylinder (Z1, Z2), to which braking regulating valve (20) a bypass line (21) and a return valve (22) blocking in outflow direction out of the hydro-cylinder (Z1, Z2) is associated, and which braking regulating valve (20), preferably, can be adjusted to a predetermined limit of a through flow quantity.

4. Solar reflector according to claim 3, **characterised in that** shock valves (24) are contained in discharge lines (23) extending from the hydro-cylinders (Z1, Z2) to the tank (R), which discharge lines (23) deviate both the braking regulating valves (20) and the combination (K).

5. Solar reflector according to claim 1, **characterised in that** the tank line (15) is connected via a flow path (33) with the first port (31) of the respective 3/2 multi-way seat valve (25) of both pairs, which first port (31) is blocked in current-free condition of the solenoid (M 1, M2), that the flow paths (34, 35) are connected with a second port (32) of the 3/2 multiway seat valve (25) of one pair, which second port (32) is open in current-free condition of the solenoid (M 1, M2), the flow paths (34, 35) further extending to a port of the 2/2 multi-way seat valve (26) of the respective other pair, which port is blocked in current-free condition of the solenoid (M1, M2), and that the pressure line (14, 36) is connected with ports (38) of the 2/2 multi-way seat valves (26) of both pairs, which ports (38) are blocked in current-free condition of the solenoid (M1, M2).

6. Solar reflector according to claim 2, **characterised in that** the flow paths (33, 34, 35, 36) and at least also in part the pressure line (14) and the tank line (15) are arranged in the housing (39) of the combination (K).

7. Solar reflector according to claim 3, **characterised in that** by the control (CU) a respective hydro-cylinder (Z1, Z2) can be unlocked in advance to the extension or retraction of another or of a second hydro-cylinder (Z2, Z1), and that the hydro-cylinder being unlocked can be dragged by the other or by the second hydro-cylinder at least without being braked by one of the braking regulating valves (20).

## Revendications

1. Réflecteur solaire (S) comprenant un dispositif de réglage (V) électrohydraulique comportant une source de pression (10), un réservoir (R) ainsi qu'une commande électronique (CU), comportant au moins deux vérins hydrauliques (Z1, Z2) d'actionnement à double effet, décalés sur un élément de rotation (3) accouplé à un miroir (1), et un groupe de vannes (13) par vérin hydraulique (Z1, Z2) comportant des vannes à siège multivoie, au moins à actionnement par électroaimant et précontraintes par ressort, dans une combinaison (K), grâce à quoi chacun des vérins hydrauliques (Z1, Z2) peut au choix être étendu ou rétracté, isolé de la source de pression et du réservoir, ou relié au réservoir (R) dans une position flottante, dans lequel la combinaison (K) comporte uniquement des vannes à siège multivoie et deux électroaimants (M1, M2 ; M3, M4) actionnables au choix soit individuellement, soit aussi le cas échéant conjointement pour libérer le vérin hydraulique (Z1, Z2), **caractérisé en ce que** la combinaison (K) est constituée de deux paires identiques comportant chacune une vanne à siège 3/2 voies (25) et une vanne à siège multivoie 2/2 (26), chaque paire étant actionnable à l'aide d'un électroaimant commun (M1, M2 ; M3, M4), **en ce qu'**une conduite de service (A ou B) du vérin hydraulique est connectée à la vanne à siège 3/2 voies (25) de chaque paire, **en ce qu'**une conduite de réservoir (15) est connectée à une première connexion (31) de la vanne à siège 3/2 voies (25) de chaque paire, **en ce qu'**une voie d'écoulement (34, 35) vers la vanne à siège multivoie 2/2 (26) de l'autre paire respective est connectée à une deuxième connexion (32) de la vanne à siège 3/2 voies (25) de chaque paire, et **en ce qu'**une conduite sous pression (14) est connectée à la vanne à siège multivoie 2/2 (26) des deux paires.

2. Réflecteur solaire selon la revendication 1, **caractérisé en ce que** les deux paires sont agencées dans un boîtier (39) commun, préférablement en acier usiné, comportant des voies d'écoulement internes (33, 34, 35, 36), sur lequel sont montés les électroaimants (M1, M2) des deux paires.

3. Réflecteur solaire selon la revendication 1, **caractérisé en ce qu'**est agencée dans chaque conduite de service (A, B), entre la combinaison (K) et le vérin hydraulique (Z1, Z2), une vanne de régulation de freinage (20) qui est associée à une conduite de dérivation (21) avec un clapet anti-retour (22) bloquant dans la direction de décharge du vérin hydraulique (Z1, Z2), et qui est préférablement réglable à une limite de débit prédéterminée.

4. Réflecteur solaire selon la revendication 3, **caractérisé en ce que** des soupapes anti-bélier (24) sont pourvues dans des conduites de décharge (23) allant du vérin hydraulique (Z1, Z2) vers le réservoir (R) qui contournent les vannes de régulation de freinage (20) et la combinaison (K).

5. Réflecteur solaire selon la revendication 1, **caractérisé en ce que** la conduite de réservoir (15) est connectée via une voie d'écoulement (33) à la première connexion (31), bloquée lorsque les électroaimants (M1, M2) ne sont pas sous tension, de la vanne à siège 3/2 voies (25) de chaque paire, **en ce que** les voies d'écoulement (34, 35) sont connectées à la deuxième connexion (32), ouverte lorsque les électroaimants (M1, M2) ne sont pas sous tension, de la vanne à siège 3/2 voies (25) d'une paire, et mènent à une connexion, fermée lorsque les électroaimants (M1, M2) ne sont pas sous tension, de la vanne à siège multivoie 2/2 (26) de l'autre paire respective, et **en ce que** la conduite sous pression (14, 36) est connectée à des connexions (38), fermées lorsque les électroaimants (M1, M2) ne sont pas sous tension, de la vanne à siège multivoie 2/2 (26) des deux paires.

6. Réflecteur solaire selon la revendication 2, **caractérisé en ce que** les voies d'écoulement (33, 34, 35, 36), et au moins aussi une partie de la conduite sous pression (14) et de la conduite de réservoir (15), sont agencées dans le boîtier (39) de la combinaison (K).

7. Réflecteur solaire selon la revendication 3, **caractérisé en ce qu'**un vérin hydraulique respectif (Z1, Z2) peut être libéré via la commande (CU) en avance par rapport à l'extension ou à la rétraction d'un autre ou d'un deuxième vérin hydraulique (Z2, Z1), et le vérin hydraulique libéré peut être déplacé au moins essentiellement sans freinage via une des vannes de freinage (20) dudit autre ou deuxième vérin hydraulique.
